(19)

**Europäisches Patentamt**
**European Patent Office**
**Office européen des brevets**

(11) **EP 3 376 746 A1**

(12) **EUROPEAN PATENT APPLICATION**
published in accordance with Art. 153(4) EPC

(43) Date of publication:
**19.09.2018 Bulletin 2018/38**

(21) Application number: **16863681.9**

(22) Date of filing: **11.11.2016**

(51) Int Cl.:
*H04M 9/08* (2006.01)

(86) International application number:
**PCT/CN2016/105456**

(87) International publication number:
**WO 2017/080505 (18.05.2017 Gazette 2017/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.11.2015 CN 201510780043**

(71) Applicant: **The Third Research Institute of Ministry of
Public Security
Xuhui District
Shanghai 200031 (CN)**

(72) Inventors:
• **RONG, Ling**
  **Shanghai 200031 (CN)**
• **WANG, Lijuan**
  **Shanghai 200031 (CN)**
• **BAO, Yiming**
  **Shanghai 200031 (CN)**
• **YANG, Zhuying**
  **Shanghai 200031 (CN)**

(74) Representative: **Handsome I.P. Ltd
27-28 Monmouth Street
Bath BA1 2AP (GB)**

(54) **ECHO SUPPRESSION TESTING METHOD**

(57) The invention relates to the technical field of audio testing, and more particularly, to an echo suppression testing method. A first audio signal generator arranged in a sending module generates a test signal and transmits the same to a first local interphone, the first local interphone transmits the test signal to a related device through a system network, and a receiving module receives the test signal and returns the test signal to the sending module; and then, compute ear-bearing sound pressure Pi generated by partial the test signal, compute, according

to a formula $Echo\ Loss = -4.7 - 20\ \lg \sum_{i=4}^{17} P_i$,

average sound pressure difference of an audio signal returned to the sending module, and judge whether the performance of an intelligent communication system is good or not according to the average sound pressure difference. The technical scheme effectively computes an echo suppression test and effectively obtains echo suppression characteristic parameters of an audio signal, and whether echo suppression characteristics are good or not can be judged by using the echo suppression characteristic parameters. The method is simple and easy to implement, is of high efficiency, and effectively improves the reliability of the whole system.

Figure 1

**Description**

**BACKGROUND OF THE INVENTION**

**1. Field of the Invention**

The invention relates to the technical field of audio testing, and more particularly, to an echo suppression testing method.

**2. Description of the Related Art**

Now, there are many digital end-to-end devices which have no standard interfaces or have transfer protocols that are non-standard or adopt encryption technology. However, the existing electro-acoustic testing methods cannot effectively test the end-to-end devices, thus, only an end-to-end full range acoustic signal can be tested. In a building intercom system which is the technical protection products for household safety, since its transfer protocol is non-standard and its interface is non-standard, the voice quality can only be tested via a full-range acoustic test. For example, in a household building intercom, when a visitor rings a doorbell of a certain household, a host of the household can talk with the visitor via a microphone or in a hand-free mode at home. During the conversation, echo will occur inevitably. And this is in particular the case when the intercom is connected in the hand-free mode, one of them is vulnerable to be interfered by his own voice returned from the other side; when the intercom is connected by picking up the handle microphone, the inner of the hand microphone responds the audio information sent by a request end back to the request end to produce echo as well. Therefore, a test needs to be done in advance for obtaining the echo conditions of the intelligent system. Now, the echo suppression testing has increasingly become a focus of attention in the field of intelligent technology.

Therefore, how to complete an experiment for the echo suppression testing in an effective way has become a big problem to those skilled in the art.

**SUMMARY OF THE INVENTION**

Aiming at the foregoing problems, the present invention provides an echo suppression testing method. In this method, a first audio signal generator arranged in a sending module generates a test signal and transmits the same to a first local interphone; the first local interphone transmits the test signal to a related device through a system network; a receiving module receives the test signals and return the test signals to the sending module, and then, compute ear-bearing sound pressure $P_i$ generated by partial test signal; compute according to a for-mula $Echo\ Loss = -4.7 - 20 \lg \sum_{i=4}^{17} P_i$ an average sound pressure difference of an audio signal returned to the sending module , the average sound pressure difference functions as a parameter for measuring echo characteristic. The specific technical scheme is as follows:

an echo suppression test method, comprising the steps of:
an intelligent communication system comprising a sending module, a system network and a receiving module is provided, wherein the sending module comprises a first audio signal generator, a first local interphone and a first audio analyzer;
the first audio signal generator generates a test signals, and the first local interphone sends the test signal to the receiving module through the system network;
the receiving module receives the test signal and returns the test signal to the sending module;
the first audio analyzer computes a ear-bearing sound pressure $P_i$ generated by partial test signal, computes according to a formula $Echo\ Loss = -4.7 - 20 \lg \sum_{i=4}^{17} P_i$ an average sound pressure difference of the audio signal returned, and determines according to the average sound pressure difference echo characteristic of the intelligent system.

The above echo suppression testing method, further comprising:

when a hands-free terminal functions as the first local interphone, if the average sound pressure difference is not less than 35dB, the echo suppression performance is good; if not, the echo suppression performance is poor;
when a handle microphone functions as the first local interphone, if the average sound pressure difference is not less than 46dB, the echo suppression performance is good; if not, the echo suppression performance is poor.

The above echo testing method, wherein the test signal has a frequency in the range of 200Hz to 4000 Hz.

The above echo testing method, wherein a time delay of the test signal is from 250ms to 300ms, and the partial test signal is derived from the last 100 ms of the test signal.

The above echo testing method, wherein before the first audio signal generator generate the test signal, it is determined whether the first audio signal generator needs to generate the test signal.

The above echo testing method, wherein the step of determining whether the first audio signal generator needs to generate the test signal further comprises:

a first time delay, from the time when the sending module sends a first audio signal to the time when the receiving module receives the first audio signal; a second time delay, from the time when the sending module sends a second audio signal to the time when the receiving module receives the second audio signal;

computing a total time delay according to the first time delay and the second time delay; and

when the total time delay is not less than 100 ms, the first audio signal generator generating the test signal; if not, the first audio signal generator not generating the test signal.

The above echo testing method, wherein the total time delay is a sum of the first time delay and the second time delay.

The above echo test method, further comprising the steps of:

before generating the test signal, the first audio signal generator of the sending module generates a set of pre-test signals.

The above echo test method, wherein the set of pre-test signals comprises three pre-test signals.

The above technical scheme has the following advantages or advantageous effects:

In the technical scheme, the echo suppression characteristic parameters of the audio signal are obtained effectively through the test, so as to effectively determine whether the echo suppression characteristic is good. The method is simple and easy to implement, is of high efficiency, and effectively improves the reliability of the whole system.

**BRIEF DESCRIPTION OF THE DRAWINGS**

The accompanying drawings, together with the specification, illustrate exemplary embodiments of the present disclosure, and, together with the description, serve to explain the principles of the present invention.

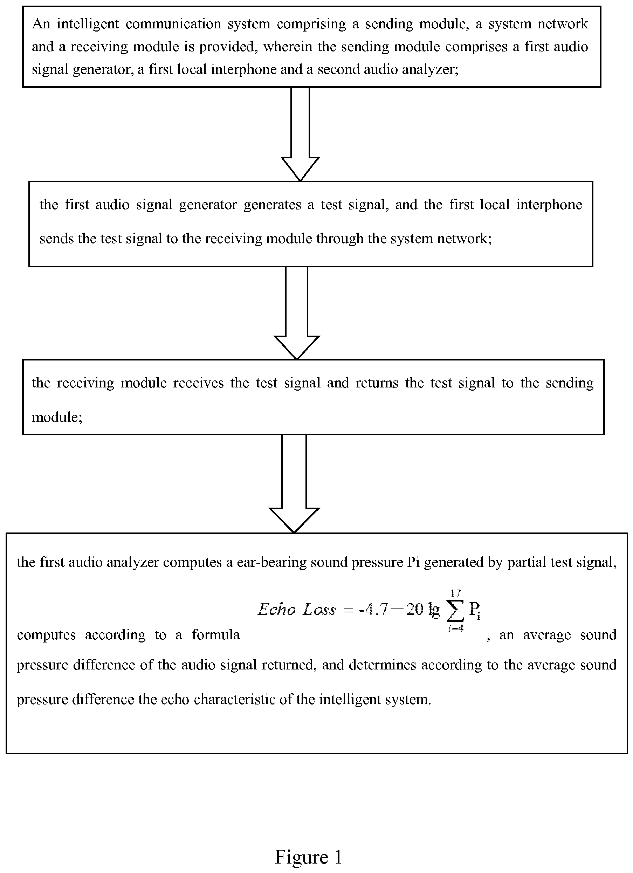

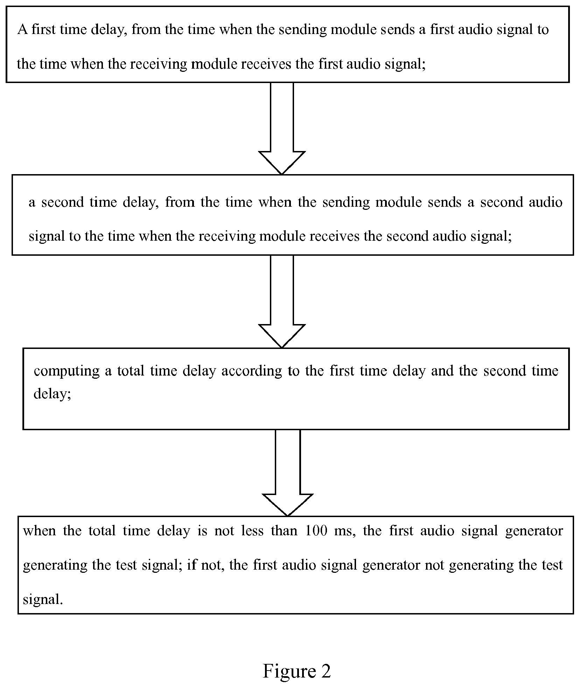

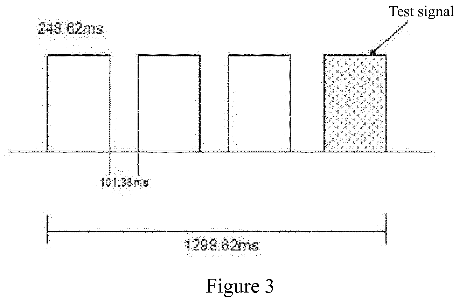

Figure 1 is a flowchart of an echo suppression testing method in an embodiment of the present invention; Figure 2 is a flowchart of a method for determining whether an echo suppression test is required in an embodiment of the present invention; Figure 3 is a schematic structural diagram of a test signal and a pre-test signal in an embodiment of the present invention.

**DETAILED DESCRIPTION**

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, certain exemplary embodiments according to the present disclosure will be described with reference to the accompanying drawings.

Referring to the structure as shown in Figure 1, the present invention provides an echo suppression testing method, the method comprising the steps of:

first, constructing an intelligent communication system comprising a sending module, a system network and a receiving module; second, a first audio signal generator of the sending module generates test signal, and a first local interphone of the sending module sends the test signal to the receiving module through the system network; then the receiving module receives the test signal and returns the test signals back to the sending module; next, a first audio analyzer of the sending module computes an ear-bearing sound pressure $P_i$ generated by partial test signal; finally, computing an average sound pressure difference of audio signal returned to the local according to a formula

$$Echo\ Loss = -4.7 - 20\ \lg \sum_{i=4}^{17} P_i\ ;$$

when a hands-free terminal functions as the first local interphone, if the average sound pressure difference obtained by computing the audio signal sent by the sending module is not less than 35dB, the echo suppression performance is good; otherwise, if the average sound pressure difference of the audio signal sent by the sending module is less than 35dB, the echo suppression performance is poor;

when a handle microphone functions as the first local interphone, if the average sound pressure difference obtained by computing the audio signal sent by the sending module is not less than 46dB, the echo suppression performance is good; otherwise, if the average sound pressure difference of the audio signal sent by the sending module is less than 46dB, the echo suppression performance is poor.

As a preferred embodiment, the test signal has a frequency in the range of 200 Hz to 4000 Hz, and a time delay of the test signals is from 250ms to 300ms, for example 250ms, 270ms, 300ms and so on. In the technical scheme, the partial test signal refers to the last 100 ms of the test signal.

As a preferred embodiment, it should be determined whether the echo suppression testing is needed before performing the echo suppression testing, and the specific method is shown in Figure 2:

first, computing a first time delay, from the time when the sending module sends a first audio signal to the time when the receiving module receives the first audio signal; then, computing a second time delay, from the time when the sending module sends a second audio signal to the time when the receiving module receives the second audio signal; computing a total time delay by summing the first time delay and the second time delay; and determining whether the total time delay is not less than 100 ms, if so, the echo suppression testing is required. And the first audio signal generator generates the test signal; otherwise, no echo suppression testing is required.

Referring to the structure as shown in Figure 3, in a preferred embodiment of the present invention, sending a set of pre-test signals before sending the test signal, wherein the set of pre-test signals comprises three pre-test signals. The purpose of the three pre-test signals is for making sure that signals generated by the first audio signal generator in the intelligent system can safely reach the receiving module. The time interval between two adjacent pre-test signals in the set of pre-test signals is 101.38 ms, and the time interval between the last pre-test signal of the set of pre-test signals and the test signal is 101.38 ms, and the duration of each of the pre-test signals and the duration of the test signals are 248.62 ms, that is, the total time for completing one signal test comprising three pre-test signals and one test signal is 1298.62ms.

As a preferred embodiment of the present invention, test the test signal for ten times by using the method, and an average value of the measurement result is taken as the result of the echo suppression testing of the present invention.

It is noted that the sending module may be a call machine installed at a door of the building intercom system, or may be a receiver installed in a room, and may also be a management device installed in a security guard room, and the sending module is not limited to a certain device. When the sending module is the call machine at the door of the building intercom system, the receiving module is a receiver installed in the room or a management device installed in the security guard room; when the sending module is the receiver installed in the room, the receiving module is a call machine of the building intercom system or a management device installed in the security guard room; when the sending module is the management device installed in the security guard room, the receiving module is a receiver installed in the room or a call machine in a building intercom system. That is, in the end-to-end transmission, the sending module and the receiving module relate to audio signal, and are not intended to be limiting of a certain device.

Such an echo suppression testing method is not only applicable to digital building intercom system, but also applicable to conventional end-to-end delay testing having non-standard interfaces, non-standard transfer protocols and encrypted transmissions. The building intercom system is only a preferred embodiment and is not intended to limit the present invention.

In conclusion, in this invention, the first audio signal generator arranged in the sending module generates a test signal and transmits the test signal to a first local interphone, the first local interphone transmits the test signal to a related device through the system network, and the receiving module receives the test signal and returns the test signal to the sending module; and then, the computer ear-bearing sound pressure Pi generated by partial test signal, compute according to the

formula $Echo\ Loss = -4.7 - 20\ \lg \sum_{i=4}^{17} P_i$ average sound pressure difference of an audio signal returned to the sending module, and judge whether the performance of an intelligent communication system is good or not according to the average sound pressure difference. The technical scheme effectively computes an echo suppression test, and effectively obtains echo suppression characteristic parameters of an audio signal, and whether the echo suppression characteristics are good or not can be judged by using the echo suppression characteristic parameters. The method is simple and easy to implement, is of high efficiency, and effectively improves the reliability of the whole system.

The above descriptions are only the preferred embodiments of the invention, not thus limiting the embodiments and scope of the invention. Those skilled in the art should be able to realize that the schemes obtained from the content of specification and drawings of the invention are within the scope of the invention.

**Claims**

1.  An echo suppression testing method, comprising the steps of:

    an intelligent communication system comprising a sending module, a system network and a receiving module is provided, wherein the sending module comprises a first audio signal generator, a first local interphone and a first audio analyzer; the first audio signal generator generates a test signal, and the first local interphone sends the test signal to the receiving module through the system network;
    the receiving module receives the test signal and returns the test signal to the sending module;
    the first audio analyzer computes a ear-bearing sound pressure $P_i$ generated by partial test signal, computes according to a formula

    $$Echo\ Loss = -4.7 - 20\ \lg \sum_{i=4}^{17} P_i$$

    an average sound pressure difference of the audio signal returned, and determines according to the average sound pressure difference the echo characteristic of the intelligent system.

2.  The echo suppression testing method of claim 1, further comprising:

    when a hands-free terminal functions as the first local interphone, if the average sound pressure difference is not less than 35dB, the echo suppression performance is good; if not, the echo suppression performance is poor;
    when a handle microphone functions as the first local interphone, if the average sound pressure difference is not less than 46dB, the echo suppression performance is good; if not, the echo suppression performance is poor.

3.  The echo testing method of claim 1, wherein the test signal has a frequency in the range of 200Hz to 4000 Hz.

4.  The echo testing method of claim 1, wherein a time delay of the test signal is from 250ms to 300ms.

5.  The echo testing method of claim 4, wherein the partial test signal is derived from the last 100 ms of the test signal.

6.  The echo testing method of claim 1, wherein before the first audio signal generator generate the test signal, it is determined whether the first audio signal generator needs to generate the test signal.

7.  The echo testing method of claim 6, wherein the step of determining whether the first audio signal generator needs to generate the test signals further comprises:

    a first time delay, from the time when the sending module sends a first audio signal to the time when the receiving module receives the first audio signal;
    a second time delay, from the time when the sending module sends a second audio signal to the time when the receiving module receives the second audio signal;
    computing a total time delay according to the first time delay and the second time delay; and when the total time delay is not less than 100 ms, the first audio signal generator generating the test signal; if not, the first audio signal generator not generating the test signal.

8.  The echo testing method of claim 7, wherein the total time delay is a sum of the first time delay and the second time delay.

9.  The echo test method of claim 1, further comprising the steps of:
    before generating the test signal, the first audio signal generator of the sending module generates a set of pre-test signals.

10. The echo test method of claim 9, wherein the set of pre-test signals comprises three pre-test signals.

An intelligent communication system comprising a sending module, a system network and a receiving module is provided, wherein the sending module comprises a first audio signal generator, a first local interphone and a second audio analyzer;

the first audio signal generator generates a test signal, and the first local interphone sends the test signal to the receiving module through the system network;

the receiving module receives the test signal and returns the test signal to the sending module;

the first audio analyzer computes a ear-bearing sound pressure Pi generated by partial test signal, computes according to a formula $Echo\ Loss = -4.7 - 20\ \lg \sum_{i=4}^{17} P_i$ , an average sound pressure difference of the audio signal returned, and determines according to the average sound pressure difference the echo characteristic of the intelligent system.

Figure 1

A first time delay, from the time when the sending module sends a first audio signal to the time when the receiving module receives the first audio signal;

a second time delay, from the time when the sending module sends a second audio signal to the time when the receiving module receives the second audio signal;

computing a total time delay according to the first time delay and the second time delay;

when the total time delay is not less than 100 ms, the first audio signal generator generating the test signal; if not, the first audio signal generator not generating the test signal.

Figure 2

Figure 3

# INTERNATIONAL SEARCH REPORT

| International application No. |
| --- |
| **PCT/CN2016/105456** |

**A.  CLASSIFICATION OF SUBJECT MATTER**

H04M 9/08 (2006.01) i

According to International Patent Classification (IPC) or to both national classification and IPC

**B.  FIELDS SEARCHED**

Minimum documentation searched (classification system followed by classification symbols)

H04Q; H04W; H04M; H04R

Documentation searched other than minimum documentation to the extent that such documents are included in the fields searched

Electronic data base consulted during the international search (name of data base and, where practicable, search terms used)

CNPAT, CNKI, IEEE, EPODOC, WPI: intercom, sound pressure difference, restrain, sound pressure, audio, check+, echo, sound, pressure

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 105450881 A (THE THIRD INSTITUTE OF MINISTRY OF PUBLIC SECURITY), 30 March 2016 (30.03.2016), claims 1-10 | 1-10 |
| X | CN 103607669 A (THE THIRD INSTITUTE OF MINISTRY OF PUBLIC SECURITY), 26 February 2014 (26.02.2014), description, paragraphs [0066], [0070], [0075], [0081], [0095] and [0102]-[0104] | 1-10 |
| A | CN 1988567 A (HUAWEI TECHNOLOGIES CO., LTD.), 27 June 2007 (27.06.2007), the whole document | 1-10 |
| A | CN 103414990 A (HANGZHOU LINKER DIGITAL TECHNOLOGY CO., LTD.), 27 November 2013 (27.11.2013), the whole document | 1-10 |
| A | CN 104902404 A (NUBIA TECHNOLOGY CO., LTD.), 09 September 2015 (09.09.2015), the whole document | 1-10 |

☐ Further documents are listed in the continuation of Box C.          ☒ See patent family annex.

| | |
| --- | --- |
| *      Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 28 December 2016 (28.12.2016) | **20 January 2017 (20.01.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Lin**<br><br>Telephone No.: (86-10) **62413203** |

Form PCT/ISA/210 (second sheet) (July 2009)

## INTERNATIONAL SEARCH REPORT
### Information on patent family members

International application No.

**PCT/CN2016/105456**

| Patent Documents referred in the Report | Publication Date | Patent Family | Publication Date |
|---|---|---|---|
| CN 105450881 A | 30 March 2016 | None | |
| CN 103607669 A | 26 February 2014 | WO 2015051630 A1 | 16 April 2015 |
| | | EP 3057333 A1 | 17 August 2016 |
| CN 1988567 A | 27 June 2007 | None | |
| CN 103414990 A | 27 November 2013 | None | |
| CN 104902404 A | 09 September 2015 | None | |

Form PCT/ISA/210 (patent family annex) (July 2009)